# EUROPEAN PATENT SPECIFICATION

(11) **EP 3 817 443 B1**
(45) Date of publication and mention of the grant of the patent: **19.07.2023**
(21) Application number: 19826229.7
(22) Date of filing: 26.06.2019
(51) Int. Cl.: H04W 24/10, H04W 74/00, H04W 74/08

(54) **METHOD EXECUTED BY USER EQUIPMENT, AND USER EQUIPMENT**
VON BENUTZERGERÄT AUSGEFÜHRTES VERFAHREN UND BENUTZERGERÄT
PROCÉDÉ EXÉCUTÉ PAR UN ÉQUIPEMENT D'UTILISATEUR, ET ÉQUIPEMENT D'UTILISATEUR

(30) Priority: 29.06.2018 CN 201810705724
(43) Date of publication of application: 05.05.2021
(73) Proprietor: Sharp Kabushiki Kaisha, Sakai-shi Osaka 590-8522 (JP); FG INNOVATION COMPANY LIMITED, Hong Kong (HK)
(72) Inventor: CHANG, Ningjuan, Shanghai 201206 (CN); LIU, Renmao, Shanghai 201206 (CN)
(74) Representative: Müller Hoffmann & Partner
(86) International application number: PCT/CN2019/093006
(87) International publication number: WO 2020/001478

(56) References cited:
- EP-A1- 3 145 236
- WO-A1-2016/190711
- WO-A1-2019/018831
- CN-A- 102 149 163
- CN-A- 107 432 042
- US-A1- 2019 028 905
- "LTE; Evolved Universal Terrestrial Radio Access (E-UTRA); Medium Access Control (MAC) protocol specification (3GPP TS 36.321 version 14.6.0 Release 14)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. 3GPP RAN, no. V14.6.0 9 April 2018 (2018-04-09), pages 1-111, XP014319755, Retrieved from the Internet: URL:http://www.etsi.org/deliver/etsi_ts/13 6300_136399/136321/14.06.00_60/ts_136321v1 40600p.pdf [retrieved on 2018-04-09]
- QUALCOMM INCORPORATED: "RACH report enhancements for SON", 3GPP DRAFT; R2-1814107 NB-IOT SON, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chengdu, China; 20181008 - 20181012 28 September 2018 (2018-09-28), XP051523566, Retrieved from the Internet: URL:http://www.3gpp.org/ftp/tsg%5Fran/WG2% 5FRL2/TSGR2%5F103bis/Docs/R2%2D1814107%2Ez ip [retrieved on 2018-09-28]
- INTEL CORPORATION ET AL: "Introduction of EDT for eMTC and NB-IoT in Rel-15 TS 36.321", 3GPP DRAFT; DRAFT_36321_CR1249R3_(REL-15)_R2-1808865_C R_EDT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Busan, Republic of Korea; 20180521 - 20180525 25 May 2018 (2018-05-25), pages 1-19, XP051520234, Retrieved from the Internet: URL:http://www.3gpp.org/ftp/tsg%5Fran/WG2% 5FRL2/TSGR2%5F102/Docs/R2%2D1808865%2Ezip [retrieved on 2018-05-25]
- "Introduction of EDT for eMTC and NB-IoT in Rel-15 TS 36. 321", 3GPP TSG RAN WG2 Meeting #102 R2-1808865, vol. RAN WG2, 25 May 2018 (2018-05-25), XP051520234,

## Description

### Technical Field

The present invention relates to the field of wireless communications technologies. More specifically, the present invention relates to a method performed by user equipment, and corresponding user equipment.

### Background

Network optimization can be performed in a wireless network to achieve the goal of optimizing network performance. Generally, techniques such as data acquisition and data analysis are used to ascertain the causes of poor network quality in existing deployed and operating networks, and techniques such as modifying configured network parameters and adjusting the network structure and deployed devices are adopted to improve network performance. In a self-configuration and self-optimization network, optimization refers to a process of automatically adjusting the network on the basis of measurement/performance measurement of user equipment and/or a base station. The network side can configure the UE to perform measurement for a SON. There are many SON functions, for example, an Automatic Neighbour Relation (ANR) function for reducing the neighbour management burden of an operator, a Mobility Load Balancing (MLB) function for balancing loads between different cells, a Mobility Robustness Optimization (MRO) function for optimizing the mobility performance of a user, a random access channel optimization function for optimizing random access channel parameters, and a radio link failure report function for optimizing coverage and MRO.

A new project for further enhancement of NarrowBand Internet of Things (NB-IoT) (see RP-181451: New WID on R16 enhancement for NB-IoT) was approved at the 3rd Generation Partnership Project (3GPP) RAN#80 plenary meeting held in June 2018. One of the goals of this research project is to realize SON functions in an NB-IoT network, including ANR, random access channel performance, and radio link failure reporting for MRO.

The present invention aims to solve the problem of how to achieve appropriate random access channel performance of SON functions in an NB-IoT network, and further solve the problem of how to feed back a random access channel report more precisely.

EP 3 145 236 A1 relates to a device and a method of handling information reporting in enhanced coverage and normal coverage.

WO 2016/1907111 A1 relates to a method of managing an indication of coverage extension (CE) level.

"LTE; Evolved Universal Terrestrial Radio Access (E-UTRA); Medium Access Control (MAC) protocol specification (3GPP TS 36.321 version 14.6.0 Release 14)", ETSI TECHNICAL SPECIFICATION, EUROPEAN TELECOMMUNICATIONS STANDARDS INSTITUTE (ETSI), 650, ROUTE DES LUCIOLES; F-06921 SOPHIA-ANTIPOLIS; FRANCE, vol. 3GPP RAN, no. V14.6.0 9 April 2018 (2018-04-09), pages 1 - 111, XP014319755 relates to a MAC architecture and a MAC entity.

"Introduction of EDT for eMTC and NB-IoT in Rel-15 TS 36. 321", 3GPP TSG RAN WG2 Meeting #102 R2-1808865, vol. RAN WG2, 25 May 2018 (2018-05-25), XP051520234 relates to MAC procedures.

### Summary of Invention

The present invention is provided in order to solve at least part of the aforementioned problems in the prior art. The present invention can provide a method performed by user equipment, and user equipment, enabling a base station to obtain a more precise RACH report, so as to perform RACH parameter adjustment more accurately based on precise information in the RACH report, thereby improving RACH performance as defined by claims 1 and 2.

In order to achieve the aforementioned objective, according to the present disclosure, a method performed by user equipment is provided, comprising: receiving a random access channel (RACH) report request from a base station; and reporting, by the user equipment, a RACH report to the base station upon receiving the RACH report request from the base station, the RACH report indicating RACH performance of the user equipment for an enhanced coverage level and/or early data transmission (EDT).

According to the present disclosure, a base station can obtain a more precise RACH report, so as to perform RACH parameter adjustment more accurately based on precise information in the RACH report, thereby improving RACH performance.

### Brief Description of Drawings

FIG. 1 is a flowchart of a method performed by user equipment according to Illustrative Example 1 that may include some but not all features as literally defined in the claims and that is present for illustration purposes only.
FIG. 2 is a flowchart of a method performed by user equipment according to an Embodiment of the present invention.
FIG. 3 is a flowchart of a method performed by user equipment according to Illustrative Example 2 that may include some but not all features as literally defined in the claims and that is present for illustration purposes only.
FIG. 4 is a flowchart of a method performed by user equipment according to Illustrative Example 3 that may include some but not all features as literally defined in the claims and that is present for illustration purposes only.
FIG. 5 is a flowchart of a method performed by user equipment according to Illustrative Example 4 that may include some but not all features as literally defined in the claims and that is present for illustration purposes only.
FIG. 6 is a block diagram of user equipment (UE) involved in the embodiment of the present invention.

### Detailed Description of Embodiment

The following describes the present invention in detail with reference to the accompanying drawings, examples and specific embodiment.

In the present invention, the terms "include" and "comprise" and derivatives thereof mean inclusion without limitation; the term "or" has an inclusive meaning and means "and/or."

The following description, which references the accompanying drawings, is used to facilitate full understanding of the embodiment of the present invention as defined by the claims. The following description includes a variety of specific details to facilitate understanding, but these details should be considered merely exemplary. Therefore, those of ordinary skill in the art should recognize that various changes and modifications may be made to the embodiment described herein without departing from the scope of the present invention as defined in the claims. In addition, the description of the known function and structure is omitted for clarity and simplicity. In addition, the same reference numerals are used for similar functions and operations throughout the accompanying drawings.

An embodiment according to the present invention is specifically described below by using a Long Term Evolution (LTE) mobile communication system and its subsequent evolved version as an exemplary application environment. However, it should be noted that the present invention may be applied to other wireless communication systems such as a machine type communication (MTC) system, and may also be applied to a 5G next-generation wireless communication system (New Radio, NR).

In the present invention, the base station may be a base station of any type, including a Node B, an enhanced base station eNB, a base station gNB in a 5G communication system, a micro base station, a picocell base station, a macro base station, or a home base station; the cell may also be a cell covered by any type of base station described above. In the present invention, if not specified, a coverage enhancement level is equivalent to an enhanced coverage level or a repetition level.

Certain concepts relating to the present invention are described first below. It is worth noting that some names in the following description are merely illustrative of examples rather than limiting, and other names may be used.

### Early data transmission (EDT):

A small data transmission optimization scheme in R15 further optimizes characteristics of small data transmission in terms of the control plane and user plane. For uplink data transmission, optimization mainly involves small data transmission along with Message 3 in a random access procedure. Compared with a conventional data transmission method, this optimization method can complete data transmission at an earlier point in time, and thus is referred to as early data transmission. In the present invention, small data (or small packet) may be equivalent to early data.

**Enhanced coverage level:** the degree to which coverage needs to be enhanced is divided into a plurality of enhanced coverage levels in the coverage enhancement technology; for example, three enhanced coverage levels are defined in NB-IoT. In some coverage enhancement methods, each enhanced coverage level may correspond to a set of different wireless parameter configurations, such as random access configurations (for example, PRACH (Physical Random Access Channel) resources). When initiating random access, a medium access control layer of UE determines an enhanced coverage level of the UE according to measured RSRP and an RSRP threshold used for determining an enhanced coverage level and received in system information, and selects a corresponding random access resource (for example, a preamble) and parameter (for example, a random access response window size) according to the determined enhanced coverage level to initiate a random access procedure. Enhanced coverage level ramping may occur in one random access procedure. That is, if the number of random access preambles transmitted by the UE at an enhanced coverage level N reaches or exceeds a set maximum, but the random access procedure has not been successful, the UE is considered to enter a subsequent enhanced coverage level N+1, that is, one in which a random access parameter corresponding to the enhanced coverage level N+1 is used to continue the random access procedure.

**Physical random access channel resource:** Physical Random Access Channel (PRACH) resource. A base station broadcasts a physical random access channel parameter configuration list (see the NPRACH-ParametersList-NB information element in 3GPP protocol specifications 36.331) on each carrier via system information. The physical random access channel parameter configuration list on each carrier includes physical random access channel parameter configurations (see the NPRACH-Parameters-NB information element in 3GPP protocol specifications 36.331) of one or a plurality of coverage enhancement levels, that is, one coverage level corresponds to a set of physical random access channel parameter configurations. This set of physical random access channel parameter configurations is referred to as one physical random access channel resource (PRACH resource). In NB-IoT, the PRACH resource is also referred to as an NPRACH resource. The physical random access channel resource may refer to a physical frequency resource and/or time-domain resource and/or code-domain resource (for example, a preamble) for random access.

**Random access channel:** Random Access Channel, RACH. The RACH refers to a channel for transmitting a random access preamble. In the present invention, a RACH can refer to a transport channel RACH or can refer to a physical random access channel (PRACH). RACH parameters/configurations refer to wireless configurations for implementing random access functions, including PRACH related configurations, for example, a maximum number of preambles transmitted, a power ramping parameter, a random access response receiving window size, a MAC contention resolution timer configuration, and a PRACH resource configuration.

In an LTE system, for RACH performance in SON functions, a base station sends a UEinformationRequest message to UE, the message includes a RACH report request indication (rach-reportreq information element) which is used to request the UE to report a RACH report of a random access procedure. After receiving the UEinformationRequest message including the indication, the UE reports the RACH report to the base station in a UEinformationReponse message. The base station uses a RACH report reported by one UE as a sample, and with sufficient samples, the base station can analyze whether the current RACH performance meets requirements, and adjust RACH parameters according to the requirements to improve RACH performance. The RACH report includes two parts: one is the number of random access preambles transmitted (numberofpreamblesent), which is used for indicating the number of random access preambles transmitted in the random access procedure and which corresponds to a PREAMBLE_TRANSMISSION_COUNTER count value of a MAC layer; the other is a contention detection indication (contentiondetected), which is used for indicating whether contention was detected for at least one transmitted random access preamble. The RACH parameters that can be adjusted by the base station may include RACH resource configuration, random access preamble division (for example, division into dedicated preambles, or dividing preambles into group A and group B), a RACH backoff parameter, a RACH transmit power control parameter, and so on.

Compared with conventional LTE random access, random access in an NB-IoT system is based on enhanced coverage levels. That is, parameters of different coverage enhancement levels are separately configured, UE at different coverage enhancement levels uses RACH parameters of corresponding coverage enhancement levels to perform random access procedures, and enhanced coverage level ramping occurs in one random access procedure; that is, the UE uses RACH parameters corresponding to more than one enhanced coverage level to perform random access in one random access procedure. If a RACH report of SON functions in the LTE system is directly used, the base station cannot tell which RACH parameter/parameters the RACH report is directed to. The base station side cannot perform more precise analysis on a received sample, and thus cannot determine which coverage enhancement level/levels should have RACH parameters adjusted and how to adjust them, resulting in inaccurate or even erroneous optimization of RACH parameters. In addition, in EDT introduced in Release15, RACH parameters of EDT are configured separately from RACH parameters of conventional non-EDT. With this configuration, the base station needs to separately adjust and optimize RACH performance for EDT and RACH performance for non-EDT. Moreover, for UE currently performing an EDT random access procedure, if a received uplink grant for transmitting Message 3 is not for EDT, the UE cancels EDT and backs off to the non-EDT mode, and employs the non-EDT mode in the subsequent random access procedure. That is, a single random access procedure may include both an EDT stage and a non-EDT stage, but RACH reporting in existing LTE systems cannot support RACH reports with greater detail. As a result, the base station cannot know whether, a received RACH report sample is applicable to RACH performance optimization for EDT or for non-EDT, which may cause inaccurate RACH performance optimization.

Therefore, the present invention focuses on how to implement a more precise RACH report, and more specifically, how to implement a more precise RACH report that considers coverage enhancement level and/or EDT. The following embodiment of the present invention provides a specific implementation for solving this problem. By means of the solutions of the present invention, the base station can obtain a more precise RACH report so as to perform RACH parameter adjustment more accurately based on precise information in the RACH report, thereby improving RACH performance.

In the following embodiment of the present invention, "indicate/indication", "notify/notification" and "inform/information" are interchangeable. "UE" may refer to NB-IoT UE, bandwidth reduced low complexity (BL) UE, UE in enhanced coverage, or other UE such as 5G NR UE. In the present invention, "PRACH", "NPRACH", and "RACH" are interchangeable.

### Illustrative Example 1

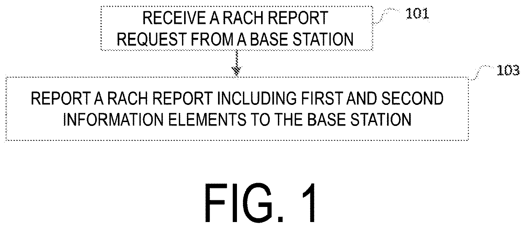

FIG. 1 is a flowchart of a method performed by user equipment according to Illustrative Example 1 that may include some but not all features as literally defined in the claims and that is present for illustration purposes only.

Example 1 provides a RACH report mode that includes enhanced coverage level information.

As shown in FIG. 1, in step 101, the UE receives a RACH report request from a base station.

Upon receiving the RACH report request, the UE reports a RACH report to the base station, as shown in step 103. At this time, the UE sets the content of the RACH report (namely, a rach-report information element) as follows:
set a first information element (for example, numberofpreamblesent) to indicate the number of random access preambles transmitted by a MAC layer in a last (most recent) successfully completed random access procedure;
set a value of a corresponding field in a second information element to "TRUE" or "1", if contention was detected or contention resolution is unsuccessful for at least one transmitted random access preamble for each used enhanced coverage level in the last (most recent) successfully completed random access procedure; otherwise, set the value of the corresponding field in the second information element to "FALSE" or "0", or do not include the second information element in the RACH report. That is, the second information element includes contention resolution information corresponding to enhanced coverage levels used or associated in one or a plurality of random access procedures. For example, a contention detection list may be included, where each contention detection item in the list may correspond to one enhanced coverage level and be used for indicating that contention was detected or contention resolution is unsuccessful for at least one transmitted random access preamble of the corresponding enhanced coverage level. Alternatively, the second information element is a bitmap, where each bit corresponds to a contention detection field of one enhanced coverage level, where if a bit is set to 1, it indicates that contention was detected or contention resolution is unsuccessful for at least one transmitted random access preamble of a corresponding enhanced coverage level, and if the bit is set to 0, it indicates that no contention was detected or contention resolution was successful for all transmitted random access preambles of the corresponding enhanced coverage level.

Preferably, the UE includes the RACH report in a UEinformationresponse message.

Optionally, after receiving the RACH report request of the base station, the UE reports the RACH report. For example, if the RACH report request (rach-reportreq) received by the UE is set to "true," the UE sets the content of the RACH report according to the above and reports the RACH report to the base station. Preferably, a RACH report request indication used by the base station to request reporting by the UE is included in a UEinformationrequest message.

The present invention does not place any limitations on a radio resource control (RRC) message including the aforementioned request or report.

By means of the method of Example 1, the base station can combine the content of the first information element and the second information element to obtain RACH performance of the UE corresponding to each used enhanced coverage level in the random access procedure, so as to more precisely perform RACH parameter adjustment and RACH performance optimization based on different enhanced coverage levels.

### Embodiment

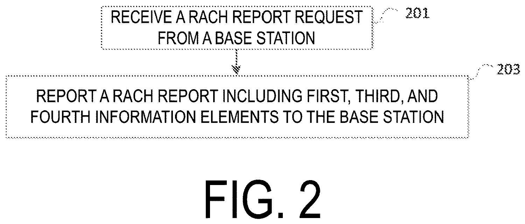

FIG. 2 is a flowchart of a method performed by user equipment according to an Embodiment of the present invention.

The Embodiment provides another RACH report mode that includes enhanced coverage level information.

As shown in FIG. 2, in step 201, the UE receives a RACH report request from a base station.

Upon receiving the RACH report request, in step 203, the UE reports a RACH report to the base station. At this time, the UE sets the content of the RACH report (namely, a rach-report information element) as follows:
set a first information element (for example, numberofpreamblesent) to indicate the number of random access preambles transmitted by a MAC layer in a last (most recent) successfully completed random access procedure;
set a value in a third information element to "TRUE" or "1", if contention was detected or contention resolution is unsuccessful for at least one transmitted random access preamble in the last (most recent) successfully completed random access procedure; otherwise, set the value in the third information element to "FALSE" or "0", or do not include the third information element in the RACH report;
set a value of a fourth information element (staringCElevel) to indicate an initial coverage enhancement level of the UE for the last (most recent) successfully completed random access procedure. The initial coverage enhancement level of the UE refers to a coverage enhancement level of the UE when the random access procedure starts, or a coverage enhancement level corresponding to a first random access preamble transmitted by the MAC layer in the random access procedure, or a coverage enhancement level determined by the MAC layer according to link signal quality (namely, RSRP) when the random access procedure is initiated. Alternatively, the fourth information element is absent if enhanced coverage level ramping/change does not occur in the random access procedure.

The UE includes the RACH report in a UEinformationresponse message.

Optionally, after receiving the RACH report request of the base station, the UE reports the RACH report. For example, if the RACH report request (rach-reportreq) received by the UE is set to "true," the UE sets the content of the RACH report according to the above and reports the RACH report to the base station. Preferably, a RACH report request indication used by the base station to request reporting by the UE is included in a UEinformationrequest message.

The present invention does not place any limitations on a radio resource control (RRC) message including the aforementioned request or report.

By means of the method in the Embodiment, the base station can combine the content of the first information element, the third information element, and the fourth information element to obtain RACH performance of the UE corresponding to each used enhanced coverage level in the random access procedure, so as to more precisely perform RACH parameter adjustment and RACH performance optimization based on different enhanced coverage levels.

### Illustrative Example 2

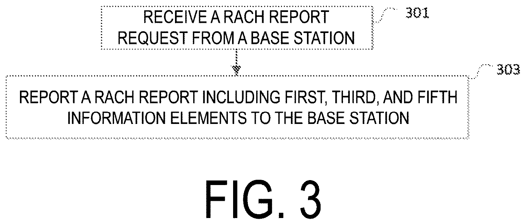

FIG. 3 is a flowchart of a method performed by user equipment according to Illustrative Example 2 that may include some but not all features as literally defined in the claims and that is present for illustration purposes only.

Example 2 provides still another RACH report mode that includes enhanced coverage level information.

As shown in FIG. 3, in step 301, the UE receives a RACH report request from a base station.

Upon receiving the RACH report request, the UE reports a RACH report to the base station, as shown in step 303. At this time, the UE sets the content of the RACH report (namely, a rach-report information element) as follows:
set a first information element (for example, numberofpreamblesent) to indicate the number of random access preambles transmitted by a MAC layer in a last (most recent) successfully completed random access procedure;
set a value in a third information element to "TRUE" or "1", if contention was detected or contention resolution is unsuccessful for at least one transmitted random access preamble in the last (most recent) successfully completed random access procedure; otherwise, set the value in the third information element to "FALSE" or "0", or do not include the third information element in the RACH report;
set a fifth information element (numberofCElevelused) to indicate the number of enhanced coverage levels used or tried by the UE in the last (most recent) successfully completed random access procedure, namely, the number of all enhanced coverage levels corresponding to all RACH resources that are used by the UE in the random access procedure. For example, an initial enhanced coverage level when the UE initiates a random access procedure is 0, but enhanced coverage level ramping occurs due to a random access response receiving failure or unsuccessful random access contention resolution, so that the UE continues to use a random access resource having an enhanced coverage level of 1 to perform random access, and then enhanced coverage level ramping occurs again, so that the UE uses a random access resource having an enhanced coverage level of 2 to perform random access, and the random access procedure is successful. Then, in this random access procedure, the UE uses RACH resources corresponding to the enhanced coverage level 0, the enhanced coverage level 1, and the enhanced coverage level 2 to perform random access, and the number of the enhanced coverage levels used by the UE is 3. Therefore, in this example, the fifth information element is set to 3.

Preferably, the UE includes the RACH report in a UEinformationresponse message.

Optionally, after receiving the RACH report request of the base station, the UE reports the RACH report. For example, if the RACH report request (rach-reportreq) received by the UE is set to "true," the UE sets the content of the RACH report according to the above and reports the RACH report to the base station. Preferably, a RACH report request indication used by the base station to request reporting of the UE is included in a UEinformationrequest message.

The present invention does not place limitations on a radio resource control (RRC) message including the aforementioned request or report.

By means of the method in Example 2, the base station can combine the content of the first information element, the third information element, and the fifth information element to obtain RACH performance of the UE corresponding to each used enhanced coverage level in the random access procedure, so as to more precisely perform RACH parameter adjustment and RACH performance optimization based on different enhanced coverage levels.

### Illustrative Example 3

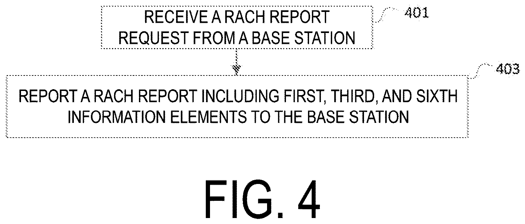

FIG. 4 is a flowchart of a method performed by user equipment according to Illustrative Example 3 that may include some but not all features as literally defined in the claims and that is present for illustration purposes only.

Example 3 provides still another RACH report mode that includes enhanced coverage level information.

As shown in FIG. 4, in step 401, the UE receives a RACH report request from a base station.

Upon receiving the RACH report request, the UE reports a RACH report to the base station, as shown in step 403. At this time, the UE sets the content of the RACH report (namely, a rach-report information element) as follows:
set a first information element (for example, numberofpreamblesent) to indicate the number of random access preambles transmitted by a MAC layer in a last (most recent) successfully completed random access procedure;
set a value in a third information element to "TRUE" or "1", if contention was detected or contention resolution is unsuccessful for at least one transmitted random access preamble in the last (most recent) successfully completed random access procedure; otherwise, set the value in the third information element to "FALSE" or "0", or do not include the third information element in the RACH report;
set a sixth information element (for example, numberofpreamblesentCElevellist) to indicate the number of random access preambles transmitted by the MAC layer corresponding to each used enhanced coverage level in the last (most recent) successfully completed random access procedure. That is, the sixth information element includes a list, where each item in the list corresponds to one enhanced coverage level and is used for indicating the number of transmitted random access preambles of the corresponding enhanced coverage level in the random access procedure. Preferably, the number of the items in the list is the number of enhanced coverage levels used or tried by the UE in the random access procedure. Alternatively, the number of the items in the list is the maximum number of enhanced coverage levels supported by the system, such as 3 in an NB-IoT system.

Preferably, the UE includes the RACH report in a UEinformationresponse message.

Optionally, after receiving the RACH report request of the base station, the UE reports the RACH report. For example, if the RACH report request (rach-reportreq) received by the UE is set to "true," the UE sets the content of the RACH report according to the above and reports the RACH report to the base station. Preferably, a RACH report request indication used by the base station to request reporting of the UE is included in a UEinformationrequest message.

The present invention does not place limitations on a radio resource control (RRC) message including the aforementioned request or report.

By means of the method in Example 3, the base station can combine the content of the first information element, the third information element, and the sixth information element to obtain RACH performance of the UE corresponding to each used enhanced coverage level in the random access procedure, so as to more precisely perform RACH parameter adjustment and RACH performance optimization based on different enhanced coverage levels.

### Illustrative Example 4

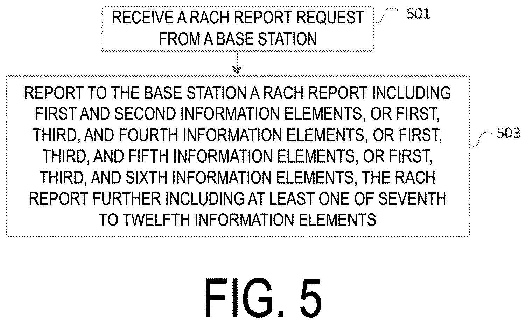

FIG. 5 is a flowchart of a method performed by user equipment according to Illustrative Example 4 that may include some but not all features as literally defined in the claims and that is present for illustration purposes only.

Example 4 provides a RACH report mode that includes EDT information.

As shown in FIG. 5, in step 501, the UE receives a RACH report request from a base station.

Upon receiving the RACH report request, the UE reports a RACH report to the base station, as shown in step 503.

In Example 4, when reporting the RACH report, the UE sets the content in the RACH report differently for EDT and non-EDT. This differentiation between EDT and non-EDT may be applied for the first to sixth information elements in the aforementioned Examples 1 to 4 and the Embodiment.

That is, the UE sets the content in the RACH report as follows:
set a first information element and a second information element as described in Example 1;
set a first information element, a third information element, and a fourth information element as described in Embodiment;
set a first information element, a third information element, and a fifth information element as described in Example 2; and
set a first information element, a third information element, and a sixth information element as described in Example 3.

Additionally, the UE may include at least one of the following information for EDT in the RACH report:
set a seventh information element (for example, numberofpreamblesent-EDT) to indicate the number of random access preambles transmitted by the MAC layer for EDT in the last (most recent) successfully completed random access procedure;
set a value of a corresponding field in an eighth information element to "TRUE" or "1", if contention was detected or contention resolution is unsuccessful for at least one transmitted random access preamble for each used enhanced coverage level for EDT in the last (most recent) successfully completed random access procedure; otherwise, set the value of the corresponding field in the eighth information element to "FALSE" or "0", or do not include the eighth information element in the RACH report. That is, the eighth information element includes contention resolution information corresponding to enhanced coverage levels used or associated in one or a plurality of random access procedures. For example, a contention detection list may be included, where each contention detection item in the list may correspond to one enhanced coverage level and be used for indicating that contention was detected or contention resolution is unsuccessful for at least one transmitted random access preamble of the corresponding enhanced coverage level for EDT. Alternatively, the eighth information element is a bitmap, where each bit corresponds to a contention detection field of one enhanced coverage level, where if a bit is set to 1, it indicates that contention was detected or contention resolution is unsuccessful for at least one transmitted random access preamble of a corresponding enhanced coverage level for EDT, and if the bit is set to 0, it indicates that no contention was detected or contention resolution was successful for all transmitted random access preambles of the corresponding enhanced coverage level for EDT;
set a value in a ninth information element to "TRUE" or "1", if contention was detected or contention resolution is unsuccessful for at least one transmitted random access preamble for EDT in the last (most recent) successfully completed random access procedure; otherwise, set the value in the ninth information element to "FALSE" or "0", or do not include the ninth information element in the RACH report;
set a value of a tenth information element (staringCElevel-EDT) to indicate an initial coverage enhancement level of the UE for EDT in the last (most recent) successfully completed random access procedure. The initial coverage enhancement level of the UE refers to a coverage enhancement level of the UE when the random access procedure starts, or a coverage enhancement level corresponding to a first random access preamble transmitted by the MAC layer in the random access procedure, or a coverage enhancement level determined by the MAC layer according to link signal quality (namely, RSRP) when the random access procedure is initiated;
set an eleventh information element (numberofCElevelused-EDT) to indicate the number of enhanced coverage levels used or tried by the UE for EDT in the last (most recent) successfully completed random access procedure. That is, the number of all enhanced coverage levels corresponding to all RACH resources that are used by the UE for EDT in the random access procedure. For example, an initial enhanced coverage level when the UE initiates a random access procedure is 0, but enhanced coverage level ramping occurs due to a random access response receiving failure or unsuccessful random access contention resolution, so that the UE continues to use a random access resource having an enhanced coverage level of 1 to perform random access, but the UE cancels EDT and backs off to a non-EDT mode because the UE receives an uplink grant for Message 3 transmission that is not for EDT, and if enhanced coverage level ramping occurs again, the UE uses a random access resource having an enhanced coverage level of 2 to perform random access, and the random access procedure is successful. Then, in this random access procedure, the UE uses RACH resources for EDT corresponding to the enhanced coverage level 0 and the enhanced coverage level 1 to perform random access, and the number of the enhanced coverage levels for EDT used by the UE is 2. Therefore, in this example, the fifth information element is set to 2;
set a twelfth information element (for example, numberofpreamblesentCElevellist-EDT) to indicate the number of random access preambles transmitted by the MAC layer for EDT corresponding to each used enhanced coverage level in the last (most recent) successfully completed random access procedure. That is, the twelfth information element includes a list, where each item in the list corresponds to one enhanced coverage level and is used for indicating the number of transmitted random access preambles for EDT of the corresponding enhanced coverage level in the random access procedure. Preferably, the number of the items in the list is the number of enhanced coverage levels for EDT used or tried by the UE in the random access procedure. Alternatively, the number of the items in the list is the maximum number of enhanced coverage levels supported by the system, such as 3 in an NB-IoT system.

### Illustrative Example 5

Illustrative Example 5 that may include some but not all features as literally defined in the claims and that is present for illustration purposes only provides still another RACH report mode that includes enhanced coverage level information.

The UE sets the content of the RACH report (namely, a rach-report information element) as follows:
set a first information element (for example, numberofpreamblesent) to indicate the number of random access preambles transmitted by a MAC layer in a last (most recent) successfully completed random access procedure;
set a value in a third information element to "TRUE" or "1", if contention was detected or contention resolution is unsuccessful for at least one transmitted random access preamble in the last (most recent) successfully completed random access procedure; otherwise, set the value in the third information element to "FALSE" or "0", or do not include the second information element in the RACH report;
set a thirteenth information element (for example, CElevelramping) to indicate that coverage enhancement level ramping occurs in the last (most recent) successfully completed random access procedure, or random access resources used in the random access procedure are associated with more than one coverage enhancement level;
set a fourteenth information element (for example, startCElevel0 or startCElevel1) to indicate that an initial coverage enhancement level of the random access procedure is a coverage enhancement level 0 or a coverage enhancement level 1, or to indicate that a coverage enhancement level corresponding to a first transmitted random access preamble in the random access procedure is a coverage enhancement level 0 or a coverage enhancement level 1.

Preferably, the UE includes the RACH report in a UEinformationresponse message.

Optionally, after receiving the RACH report request of the base station, the UE reports the RACH report. For example, if the RACH report request (rach-reportreq) received by the UE is set to "true," the UE sets the content of the RACH report according to the above and reports the RACH report to the base station. Preferably, a RACH report request indication used by the base station to request reporting of the UE is included in a UEinformationrequest message.

The present invention does not place limitations on a radio resource control (RRC) message including the aforementioned request or report.

By means of the method in Example 5, the base station can combine the content of the first information element, the third information element, and the thirteenth and fourteenth information elements to obtain RACH performance of the UE corresponding to each used enhanced coverage level in the random access procedure, so as to more precisely perform RACH parameter adjustment and RACH performance optimization based on different enhanced coverage levels.

It is worth noting that the information elements included in the RACH report are all optional. That is, the UE may report any combination of one or more of the information elements in the RACH report.

In addition, in the present disclosure, the random access procedure may be the last (most recent) successfully completed random access procedure described in the embodiment or a (most recent) failed random access procedure. For the latter, for example, when the UE fails in a random access procedure for RRC connection establishment/recovery, the UE includes random access information of a random access failure corresponding to a connection establishment failure in a connection establishment failure report (ConnEstFailReport). At this time, the first to fourteenth information elements in the aforementioned examples and embodiment may be included in the connection establishment failure report to indicate corresponding information of the failed random access procedure. If the UE has a connection establishment failure report saved thereon, the UE reports connection failure information availability indication through an RRC message to inform the base station that the UE has a connection establishment failure report saved thereon or the UE has experienced a connection establishment failure. Based on this indication, the base station requests the UE to report the saved connection establishment failure report through an RRC message (which is usually UEinformationrequest) including a connection establishment failure report request information element, and the UE receiving the request reports the connection establishment failure report saved thereon in a response RRC message. Thus, in the present disclosure, the aforementioned method for a RACH report is also applicable to a connection establishment failure report.

It is worth noting that in the aforementioned examples and embodiment, the step in which the UE receives a RACH report request from the base station is optional. For this step, the RACH report request may also be included in a random access response message (namely) or an RRC connection establishment/recovery/reestablishment message (namely, a fourth message in a random access procedure). In one implementation, the RACH report request may also be included in system information to indicate that the UE is allowed to report a RACH report or request the UE to report the RACH report. Preferably, when the RACH report request is included in system information, the UE is UE that supports (employs) a user plane optimization mechanism and/or UE that supports (employs) a control plane optimization mechanism; or the UE is UE that supports (employs) a user plane optimization EDT mechanism (namely, UP-EDT) and/or UE that supports (employs) a control plane optimization EDT mechanism (namely, CP-EDT).

In one implementation, the UE includes one or more of the second to fourteenth information elements in the RACH report when enhanced coverage level ramping/change occurs in the random access procedure. The occurrence of enhanced coverage level ramping/change may also be understood as random access resources used in the random access procedure, such as random access preambles, being associated with a plurality of NPRACH resources, namely, a plurality of coverage enhancement levels. Otherwise, the UE does not include the second to fourteenth information elements (that is, the information elements are absent) in the RACH report.

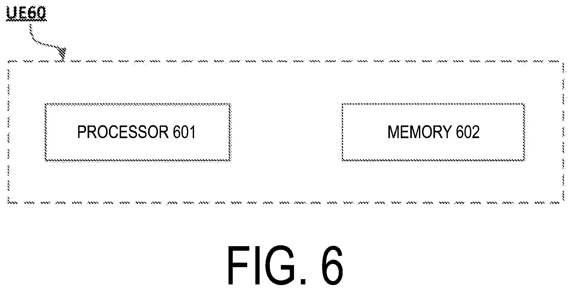

FIG. 6 is a block diagram of user equipment (UE) involved in the embodiment of the present invention. As shown in FIG. 6, the user equipment (UE) 60 includes a processor 601 and a memory 602. The processor 601 may include, for example, a microprocessor, a microcontroller, or an embedded processor. The memory 602 may include, for example, a volatile memory (for example, a random access memory (RAM)), a hard disk drive (HDD), a non-volatile memory (for example, a flash memory), or other memories. The memory 602 stores program instructions. The instructions, when run by the processor 601, can perform the aforementioned method performed by user equipment described in detail in the present disclosure.

The program running on the device according to the present invention may be a program that enables the computer to implement the functions of the embodiment of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiment of the present invention may be recorded on a computer-readable recording medium. The corresponding functions may be achieved by reading programs recorded on the recording medium and executing them by the computer system. The phrase "computer system" herein may refer to a computer system embedded in the device, which may include operating systems or hardware (for example, peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiment may be implemented or executed by circuits (for example, monolithic or multi-chip integrated circuits). Circuits designed to execute the functions described in this description may include general-purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of the advances in semiconductor technology, the embodiment of the present invention may also be implemented using these new integrated circuit technologies.

Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiment of the present invention has been described in detail above with reference to the accompanying drawings. In addition, various modifications can be made to the present invention within the scope of the claims.

## Claims

1. A User Equipment, UE, (60) comprising:
a processor (601); and
a memory (602) that stores program instructions, wherein
the processor (601) runs the program instructions to:
receive, from a base station, a UEinformationRequest message including a random access channel, RACH, report request set to TRUE, the RACH report request being used to request the UE to report a RACH report; and
transmit, to the base station, a UEinformationResponse message including the RACH report, wherein
the RACH report includes an information element, a value of the information element being set to indicate an initial coverage enhancement level used for the last successfully completed random access procedure, the initial coverage enhancement level being one of a plurality of coverage enhancement levels used in the last successfully completed random access procedure,
includes another information element, a value of the another information element being set to indicate a number of random access preambles transmitted by a medium access control layer, MAC, layer in a last successfully completed random access procedure, and
the RACH report includes yet another information element, a value of the yet another information element being set to TRUE if contention resolution is unsuccessful for at least one transmitted random access preamble in the last successfully completed random access procedure, the value being set to FALSE, otherwise, and
the processor (601) runs the program instructions to cause the MAC layer of UE (60) to:
when the last successfully completed random access procedure is initiated, determine the initial coverage enhancement level of the UE (60) according to measured RSRP and an RSRP threshold used for determining the initial coverage enhancement level and received in system information; and
select a corresponding preamble and a corresponding random access response window size according to the initial coverage enhancement level.

2. A control method in a User Equipment, UE, (60) comprising:
receiving (201), from a base station, a UEinformationRequest message including a random access channel, RACH, report request set to TRUE, the RACH report request being used to request the UE to report RACH report; and
transmitting (203), to the base station, a UEinformationResponse message including the RACH report, wherein
the RACH report includes an information element, a value of the information element being set to indicate an initial coverage enhancement level used for the last successfully completed random access procedure, the initial coverage enhancement level being one of a plurality of coverage enhancement levels used in the last successfully completed random access procedure,
includes another information element, a value of the another information element being set to indicate a number of random access preambles transmitted by a medium access control layer, MAC, layer in a last successfully completed random access procedure, and
the RACH report includes yet another information element, a value of the yet another information element being set to TRUE if contention resolution is unsuccessful for at least one transmitted random access preamble in the last successfully completed random access procedure, the value being set to FALSE, otherwise, and wherein
when the last successfully completed random access procedure is initiated, the UE determines the initial coverage enhancement level of the UE (60) according to measured RSRP and an RSRP threshold used for determining the initial coverage enhancement level and received in system information; and
selects a corresponding preamble and a corresponding random access response window size according to the initial coverage enhancement level.

## Patentansprüche

1. Nutzerendgerät, UE, (60), aufweisend:
einen Prozessor (601); und
einen Speicher (602), der Programmanweisungen speichert, wobei
der Prozessor (601) die Programmanweisungen ausführt, um:
von einer Basisstation eine UE-Informationsanforderungsnachricht zu empfangen, die eine Berichtsanforderung eines Direktzugriffskanals, RACH, enthält, die auf TRUE gesetzt ist, wobei die RACH-Berichtsanforderung verwendet wird, um das UE aufzufordern, einen RACH-Bericht zu übermitteln; und
zur Basisstation eine UE-Informationsantwortnachricht zu übertragen, die den RACH-Bericht enthält, wobei
der RACH-Bericht ein Informationselement enthält, wobei ein Wert des Informationselements gesetzt wird, um ein anfängliches Abdeckungsverbesserungsniveau anzugeben, das für die letzte, erfolgreich abgeschlossene Direktzugriffsprozedur verwendet wurde, wobei das in der letzten, erfolgreich abgeschlossenen Direktzugriffsprozedur verwendete anfängliche Abdeckungsverbesserungsniveau eines von einer Vielzahl von Abdeckungsverbesserungsniveaus ist,
ein weiteres Informationselement enthält, wobei ein Wert des weiteren Informationselements gesetzt wird, um eine Anzahl von Direktzugriffspräambeln anzugeben, die durch eine Medienzugriffssteuerungs-, MAC-, Schicht in einer letzten, erfolgreich abgeschlossenen Direktzugriffsprozedur übertragen wurden, und
der RACH-Bericht noch ein weiteres Informationselement enthält, wobei ein Wert des noch weiteren Informationselements auf TRUE gesetzt wird, falls eine Konkurrenzsituationsauflösung für zumindest eine übertragene Direktzugriffspräambel in der letzten, erfolgreich abgeschlossenen Direktzugriffsprozedur nicht erfolgreich ist, wobei der Wert ansonsten auf FALSE gesetzt wird, und
der Prozessor (601) die Programmanweisungen ausführt, um zu veranlassen, dass die MAC-Schicht des UE (60):
wenn die letzte, erfolgreich abgeschlossene Direktzugriffsprozedur eingeleitet wird, das anfängliche Abdeckungsverbesserungsniveau des UE (60) gemäß einem gemessenen RSRP und einer RSRP-Schwelle bestimmt, die zum Bestimmen des anfänglichen Abdeckungsverbesserungsniveaus verwendet werden und in einer Systeminformation empfangen werden, und
eine entsprechende Präambel und eine entsprechende Direktzugriffsantwort-Fenstergröße gemäß dem anfänglichen Abdeckungsverbesserungsniveau auswählt.

2. Steuerungsverfahren in einem Nutzerendgerät, UE, (60), aufweisend:
Empfangen (201), von einer Basisstationsvorrichtung, einer UE-Informationsanforderungsnachricht, die eine Berichtsanforderung eines Direktzugriffskanals, RACH, enthält, die auf TRUE gesetzt ist, wobei die RACH-Berichtsanforderung verwendet wird, um das UE aufzufordern, einen RACH-Bericht zu übermitteln; und
Übertragen (203), zur Basisstation, einer UE-Informationsantwortnachricht, die den RACH-Bericht enthält, wobei
der RACH-Bericht ein Informationselement enthält, wobei ein Wert des Informationselements gesetzt wird, um ein anfängliches Abdeckungsverbesserungsniveau anzugeben, das für die letzte, erfolgreich abgeschlossene Direktzugriffsprozedur verwendet wurde, wobei das in der letzten, erfolgreich abgeschlossenen Direktzugriffsprozedur verwendete anfängliche Abdeckungsverbesserungsniveau eines von einer Vielzahl von Abdeckungsverbesserungsniveaus ist,
ein weiteres Informationselement enthält, wobei ein Wert des weiteren Informationselements gesetzt wird, um eine Anzahl von Direktzugriffspräambeln anzugeben, die durch eine Medienzugriffssteuerungs-, MAC-, Schicht in einer letzten, erfolgreich abgeschlossenen Direktzugriffsprozedur übertragen wurden, und
der RACH-Bericht noch ein weiteres Informationselement enthält, wobei ein Wert des noch weiteren Informationselements auf TRUE gesetzt wird, falls eine Konkurrenzsituationsauflösung für zumindest eine übertragene Direktzugriffspräambel in der letzten, erfolgreich abgeschlossenen Direktzugriffsprozedur nicht erfolgreich ist, wobei der Wert ansonsten auf FALSE gesetzt wird, und wobei,
wenn die letzte, erfolgreich abgeschlossene Direktzugriffsprozedur eingeleitet wird, das UE das anfängliche Abdeckungsverbesserungsniveau des UE (60) gemäß einem gemessenen RSRP und einer RSRP-Schwelle bestimmt, die zum Bestimmen des anfänglichen Abdeckungsverbesserungsniveaus verwendet werden und in einer Systeminformation empfangen werden, und
eine entsprechende Präambel und eine entsprechende Direktzugriffsantwort-Fenstergröße gemäß dem anfänglichen Abdeckungsverbesserungsniveau auswählt.

## Revendications

1. Equipement utilisateur, UE, (60) comprenant :
un processeur (601) ; et
une mémoire (602) qui stocke des instructions de programme, dans lequel
le processeur (601) exécute les instructions de programme pour :
recevoir, à partir d'une station de base, un message de demande d'informations d'UE comportant une demande de rapport de canal d'accès aléatoire, RACH, établie à VRAI, la demande de rapport de RACH étant utilisée pour demander à l'UE de rapporter un rapport de RACH ; et
transmettre, à la station de base, un message de réponse d'informations d'UE comportant le rapport de RACH, dans lequel
le rapport de RACH comporte un élément d'information, une valeur de l'élément d'information étant établie pour indiquer un niveau initial d'amélioration de couverture utilisé pour la dernière procédure d'accès aléatoire achevée avec succès, le niveau initial d'amélioration de couverture étant l'un d'une pluralité de niveaux d'amélioration de couverture utilisés dans la dernière procédure d'accès aléatoire achevée avec succès,
comporte un autre élément d'information, une valeur de l'autre élément d'information étant établie pour indiquer un nombre de préambules d'accès aléatoire transmis par une couche de commande d'accès au support, MAC, dans une dernière procédure d'accès aléatoire achevée avec succès, et
le rapport de RACH comporte encore un autre élément d'information, une valeur de l'encore un autre élément d'information étant établie à VRAI si une résolution de contention a échoué pour au moins un préambule d'accès aléatoire transmis dans la dernière procédure d'accès aléatoire achevée avec succès, sinon la valeur étant établie à FAUX, et
le processeur (601) exécute les instructions de programme pour amener la couche MAC de l'UE (60) à :
lorsque la dernière procédure d'accès aléatoire achevée avec succès est lancée, déterminer le niveau initial d'amélioration de couverture de l'UE (60) en fonction d'une RSRP mesurée et d'un seuil de RSRP utilisés pour déterminer le niveau initial d'amélioration de couverture et reçus dans des informations de système ; et
sélectionner un préambule correspondant et une taille de fenêtre de réponse d'accès aléatoire correspondante en fonction du niveau initial d'amélioration de couverture.

2. Procédé de commande dans un équipement utilisateur, UE, (60) comprenant :
la réception (201), à partir d'une station de base, d'un message de demande d'informations d'UE comportant une demande de rapport de canal d'accès aléatoire, RACH, établie à VRAI, la demande de rapport de RACH étant utilisée pour demander à l'UE de rapporter un rapport de RACH ; et
la transmission (203), à la station de base, d'un message de réponse d'informations d'UE comportant le rapport de RACH, dans lequel
le rapport de RACH comporte un élément d'information, une valeur de l'élément d'information étant établie pour indiquer un niveau initial d'amélioration de couverture utilisé pour la dernière procédure d'accès aléatoire achevée avec succès, le niveau initial d'amélioration de couverture étant l'un d'une pluralité de niveaux d'amélioration de couverture utilisés dans la dernière procédure d'accès aléatoire achevée avec succès,
comporte un autre élément d'information, une valeur de l'autre élément d'information étant établie pour indiquer un nombre de préambules d'accès aléatoire transmis par une couche de commande d'accès au support, MAC, dans une dernière procédure d'accès aléatoire achevée avec succès, et
le rapport de RACH comporte encore un autre élément d'information, une valeur de l'encore un autre élément d'information étant établie à VRAI si une résolution de contention a échoué pour au moins un préambule d'accès aléatoire transmis dans la dernière procédure d'accès aléatoire achevée avec succès, sinon la valeur étant établie à FAUX, et dans lequel
lorsque la dernière procédure d'accès aléatoire achevée avec succès est lancée, l'UE détermine le niveau initial d'amélioration de couverture de l'UE (60) en fonction d'une RSRP mesurée et d'un seuil de RSRP utilisés pour déterminer le niveau initial d'amélioration de couverture et reçus dans des informations de système ; et
sélectionne un préambule correspondant et une taille de fenêtre de réponse d'accès aléatoire correspondante en fonction du niveau initial d'amélioration de couverture.
